# EUROPEAN PATENT SPECIFICATION

(11) **EP 3 270 739 B1**
(45) Date of publication and mention of the grant of the patent: **23.06.2021**
(21) Application number: 16708725.3
(22) Date of filing: 19.02.2016
(51) Int. Cl.: A47D 13/08, A61G 11/00

(54) **A METHOD FOR MAKING A SUPPORT FOR SUPPORTING A NEONATE**
VERFAHREN ZUR HERSTELLUNG EINER STÜTZE ZUM STÜTZEN EINES NEUGEBORENEN.
UNE MÉTHODE DE FABRICATION D'UN SUPPORT POUR SOUTENIR UN NOUVEAU-NÉ.

(30) Priority: 19.03.2015 US 201562135349 P
(43) Date of publication of application: 24.01.2018
(73) Proprietor: Koninklijke Philips N.V., 5656 AG Eindhoven (NL)
(72) Inventor: VERSTEGEN, Emile Johannes Karel, 5656 AE Eindhoven (NL); SÄTTELE, Vanessa, 5656 AE Eindhoven (NL); VAN LIESHOUT, Marjolein Irene, 5656 AE Eindhoven (NL)
(74) Representative: Philips Intellectual Property & Standards
(86) International application number: PCT/IB2016/050905
(87) International publication number: WO 2016/147065

(56) References cited:
- WO-A1-2013/177148
- JP-A- H08 308 887
- JP-A- 2003 305 103
- US-A1- 2013 096 365

## Description

### FIELD

The following relates generally to supporting and holding a neonate, and to related arts such as the neonate incubator arts.

### BACKGROUND

Prematurely born neonates do not have the capability to position themselves in a comfortable position due to their underdeveloped proprioception and muscle strength. When neonates experience distress, they reflexively stretch their back and spread their arms, thereby adding to their discomfort. Once in this stressful position, the neonates are unable to reposition themselves back into a comfortable position.

Furthermore, neonates find containment to add to their comfort (i.e., by mimicking a womb) and such containment provides continuous pressure against their limbs to help muscle and bone formation. On the other hand, as many neonates have underdeveloped lungs and can depend on mechanical ventilation, it is important that their lungs inflate and deflate properly, and so the containment should not adversely impact neonate respiration.

Proper lung inflation, as well as comfortable lying and containment all start with proper positioning. Currently, neonates are properly positioned in a fetal posture, in which the hands are close to the face, the elbows are touching each other, the back is rounded, and the knees are lifted towards the chin. This posture should be emulated in side, prone, and supine positions.

The following provides new and improved methods and systems which overcome the above-referenced problems and others.

US 2013/096365A1 discloses a securing device for transport of a neonatal patient in a temperature-controlled incubator comprises a vacuum mattress.

JP 2003305103 A discloses a bathing mat comprises a three-dimensional reticulated structure of which the voids are not less than 80% and has excellent water permeability and drainage properties.

JPH08308887 A discloses a bedsore preventive structure having a mat with an integrated bag, and for example, paraffin wax having a melting point of 40 deg.C is sealed in this mat, and a sheath heater is arranged in a recessed part.

WO 2013/177148 A1 discloses a positioning device for stabilizing a subject on an operation table without a clinician's manual fitting.

### BRIEF SUMMARY

It is recognized that known systems and methods of positioning a neonate have deficiencies. Conventionally, neonates in an incubator are contained and cushioned by suitably arranged pillow-type supports. However, movement of the neonate can move these supports out of position, leaving the neonate uncomfortable. Additionally, it has been found that relatively close containment of the neonate is beneficial as it simulates womb conditions and tends to comfort the neonate. On the other hand, since many neonates have underdeveloped lungs, sufficient room must be provided for respiration. Similar considerations arise in the context of carrier for transporting the neonate outside of the incubator.

Various improvements are disclosed herein.

In some illustrative embodiments, a disclosed neonate positioning device can employ a backbone made of a material that is sufficiently stiff to provide support and resist movements of the neonate, yet also sufficiently pliable to enable a user *(i.e.,* a nurse) to adjust the backbone to conform with the specific neonate.

In some embodiments, the backbone is contemplated to be made of an elastomeric material that has the requisite balance between stiffness and flexibility. In other embodiments, the backbone is made of a material that becomes flexible upon application of slight heating. Some disclosed materials with this property comprise aliphatic compounds, especially those with melting points around 37-42°C or so. Such compounds become soft upon application of slight warmth, such as that generated by a nurse holding the backbone. In such cases, the backbone may be shapeable by hand, even while in contact with the neonate. In other disclosed embodiments, an aliphatic compound with a higher melting point (*e.g.,* 46-65°C) may be used. In this case, it may not be possible to shape the backbone while contacting the neonate, but the shaping could be performed after heating with a hairdryer or other moderate source of warmth.

Aliphatic compounds with suitably low melting temperatures may have properties that are undesirable in a neonate support backbone, such as being in the form of an oil or fatty substance. To address this, structures have been developed in which the backbone has a containment bag, bladder, liner, or the like (for example, made of silicone and/or polyethylene) which is filled with cotton or another filler material providing desirable cushioning and into which an aliphatic oil is dispersed by soaking and/or capillary action. The resulting backbone is relatively pliable like a pillow, but has the desired stiffness at room temperature due to the aliphatic compound while being shapeable upon application of sufficient warmth.

In accordance with the invention a method for making a support for supporting a neonate is provided. A bottom portion of a silicone layer is molded into a container-like shape. A body portion is placed into the container-like shape of the silicone layer. A heated aliphatic layer is poured over the body portion. The aliphatic layer is cooled. A top portion of the silicone layer is added over the body portion to seal the support.

One advantage resides in providing a support for a neonate that is made from a single unit.

Another advantage resides in providing a support for a neonate that can be manipulated with an external stimulus applied to the support.

Another advantage resides in providing a support for a neonate that encourages healthy neonate bone and muscle growth.

Still further advantages of the present disclosure will be appreciated to those of ordinary skill in the art upon reading and understanding the following detailed description.

### BRIEF DESCRIPTION OF THE DRAWINGS

The drawings are only for purposes of illustrating the preferred embodiments and are not to be construed as limiting the scope of the present invention.
FIGURE 1 shows a support for a neonate in one embodiment of the present disclosure.
FIGURE 2 shows a shaped version of the support of FIGURE 1.
FIGURE 3 shows an example use flow chart for manufacturing the support of FIGURES 1 and 2.
FIGURES 4A-F show exemplary steps of the process of FIGURE 3 for producing the support of FIGURES 1 and 2.

### DETAILED DESCRIPTION

Ideally, positioning of a neonate should be done with one support that can solve numerous positioning needs. For example, the support should be able to take on various shapes according to the size and needs of the neonate. The support should provide resistance to deformation, caused by motion (e.g. kicking hands and feet, and the like) of the neonate. In some illustrative embodiments, the support is made from one or more materials that can be shaped in an easy way and then frozen in a desired shape during use, suiting the needs of the neonate. A support body suitably has a skeleton made of such material. An outside layer may be cotton or another skin-friendly material.

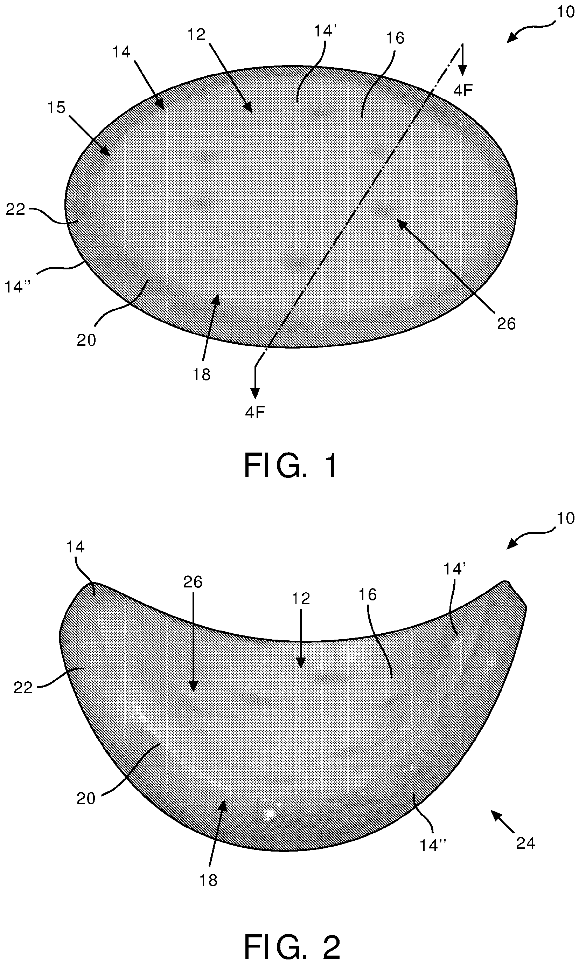

Supports disclosed herein are shapeable upon application of a stimulus thereto. With reference to FIGURE 1, a support **10** for supporting a neonate is formed. It will be appreciated that the support **10** can be used to support a target tissues, body parts, or anatomical portions of the neonate (e.g., the head, the neck, the torso, and the like) or multiple target tissues, body parts, or anatomical portions of the neonate (e.g., the head, the neck, the torso, the arms, the legs, and the like). Moreover, as used herein, the term "target tissue" refers to any desired target tissue, body parts, or anatomical portions (e.g., the head, the neck, the torso, the arms, the legs, and the like) of a neonate. As shown in FIGURE 1, the support **10** includes a body portion **12** and a silicone layer or container **14.** A neonate (not shown) can be positioned on the support **10.** The body portion **12** can have any geometry (e.g., circular, rectangular, square, and the like) and can be shaped into a desired shape for holding and supporting a neonate *(i.e.,* like a "divot"). The illustrative support **10** has a disk geometry, and FIGURE 1 shows the disk in a flat (or planar) configuration. Advantageously, the body portion **12** is configured for adjustment during use, as described in more detail below (see, e.g. FIGURE 2 where the disk is shaped into a curved geometry).

In some example embodiments, the body portion **12** is made from a shapeable material **16.** In some embodiments, the shapeable material includes an aliphatic compound (also known as a non-aromatic compound). As understood by one of skill in the art, aliphatic compounds are organic compounds that do not include aromatic rings. In an aliphatic compound, the carbon atoms usually form straight or branched chains, or "looser" ring structures as compared with aromatic rings. Thus, aliphatic solids tend to be shapeable, and typically exhibit relatively low melting points. Some illustrative relatively soft aliphatic solids include certain elastomers, resins, waxes, fats, and emulsifiers. Elastomers provide elasticity or bounce for the body portion 12, and can be a natural latex, such as couma macrocarpa *(i.e.,* leche caspi or sorva latex), loquat *(i.e.,* nispero), tunu, jelutong, chicle, or a synthetic rubber (e.g. styrene-butadiene rubber, butyl rubber, polyisobutylene). Resins may be incorporated to provide a cohesive body or strength for the body portion 12. Some suitable resins include glycerol esters of gum, terpene resins, and/or polyvinyl acetate. The body portion 12 may further include a wax, which acts as a softening agent for the body portion 12. Some suitable waxes include paraffin or microcrystalline wax. A fat material may be included - fats behave as plasticizers for the body portion 12, and can be hydrogenated vegetable oils. An emulsifier may be added to aid with hydration for the body portion 12, and can be lecithin or glycerol monostearate. Various combinations of one or more of an elastomer, resin, wax, fat, or emulsifier may be used to provide a composite with desired properties. Fillers may also be provided to impart texture for the body portion **12,** and can for example be calcium carbonate or talc. The shapeable material **16** of the body portion **12** is designed to be: (i) sufficiently pliable to enable adjustment thereof to conform to a shape of the neonate upon application of a stimulus to the body portion 12; and (ii) sufficiently stiff to provide support for, and resist movements of, the neonate in the absence of the stimulus. In addition, the body portion **12** has a stiffness to provide pressure against the neonate, thereby facilitating bone and muscle growth of the neonate.

In some embodiments, the silicone layer **14** partially surrounds a portion of the body portion 12. In other examples, the silicone layer **14** is a container that completely surrounds the body portion **12.** In some embodiments, the silicone layer **14** is a container that encapsulates the body portion **12** to prevent leakage of the (typically soft, or semi-solid) shapeable material **16.** To do so, the silicone layer **14** is made from a silicone material (e.g., medical grade silicone, hydroxyl-terminated silicone cured with boric acid, and the like) that is has a low degree of hardness (e.g., 0-10 Shore hardness). Stated another way, the silicone layer **14** is soft. The silicone layer **14** is transparent or translucent so as to reveal an interior thereof. In some instances, the silicone layer **14** includes a top portion **14'** and a bottom portion **14".** For example, the bottom portion **14"** can be formed to a container-like shape (e.g., a box-like shape, a bowl-like shape, and the like). The body portion **12** is inserted into the container-like shape of the bottom portion **14",** and the top portion **14'** is positioned over the body portion **12** to "close off the container" and seal the support **10.** Once the silicone layer **14** is positioned about the body portion **12,** the support **10** is cured. The degree of curing determines the rigidity of the silicone layer **14.**

In some embodiments, a barrier layer **15** is disposed between the shapeable material **16** and the silicone layer **14.** The barrier layer **15** is provided to prevent diffusion of the shapeable material **16** to the silicone layer **14.** The barrier **15** is composed of a suitable packaging material, such as polyethyleneterephthalate (PET). In some examples, a bag of polyethyleneterephthalate can be used to make the barrier layer **15.** This bag can be filled with the shapeable material **16** and sealed. The resulting bag is immersed in the silicone layer **14,** which is held in place in a mold followed be curing of the silicone layer **14.**

With reference to FIGURE 2, shapeability of the support **10** is illustrated. As previously mentioned, FIGURE 1 shows the illustrative support **10** in a flat, planar shape.

FIGURE 2 shows the support **10** shaped to have a concave surface (facing generally upward in illustrative FIGURE 2) and an opposite concave surface (not visible from the vantage of FIGURE 2). The shapeable material **16** includes an aliphatic layer **18** disposed on at least a portion of the body portion **12.** In some examples, the aliphatic layer **18** is disposed on a selected portion of the body portion **12.** In other examples, the aliphatic layer **18** completely surrounds the body portion **12.** Advantageously, the aliphatic layer **18** is shapeable upon application of an external stimulus, as described in more detail below.

The aliphatic layer **18** is made from an aliphatic compound **20.** As known to one of skill in the art, aliphatic compounds become shapeable when a force or stimulus is applied thereto (e.g., warmth). Thus, the aliphatic compound **20** can be warmed, shaped into a desired shape, and then cooled to maintain the desired shape. In some embodiments, the aliphatic compound **20** is selected from a group of compounds including nonadecane, icosane, heneicosane, docosane, tricosane, pentacosane, and triacontane. Table 1 provides the chemical formula and melting temperature of each of these illustrative aliphatic compounds **20.** These are merely illustrative examples, and other aliphatic compounds, or other materials with desired shapeability properties, are also contemplated.

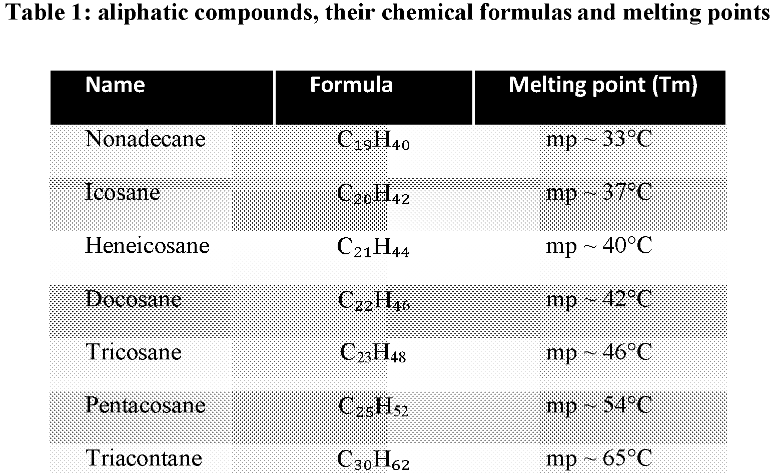

As can be discerned from Table 1, the melting temperature of the aliphatic compound **20** typically increases as the length of the molecule increases. In one example, icosane has a melting point of 37°C, thereby allowing a user to warm the icosane aliphatic layer **18** by hand (*i.e.*, ambient body heat) and shape the body portion **12** into a desired shape to hold the neonate, even while the neonate is positioned on the support **10.** In another example, docosane has a higher melting point of 42°C, thereby allowing a user to warm the aliphatic layer **18** with a small, easily-available heating unit (*e.g.,* a blow dryer, a space heater, and the like) and shape the body portion **12** into a desired shape to hold the neonate, even while the neonate is positioned on the support **10.** More generally, in some embodiments the aliphatic compound has a melting point in the range 30°C-70°C inclusive, so that holds its shape at room temperature (suitably defined as 20°C-27°C inclusive, and more typically 20°C-25°C) and becomes shapeable upon application of thermal energy. It should be noted that the applied thermal energy does not necessarily need to heat the aliphatic compound above its melting point, as the aliphatic compound may become soft and deformable at a temperature close to, but still below, its melting point.

The aliphatic compound **20** may have properties that are undesirable, such as being in the form of an oil or fatty substance. To address this, the silicone layer **14** is configured as a containment bag, bladder, liner, or the like. The aliphatic layer **18** is embedded within or contained inside the silicone layer **14.** Stated another way, the silicone layer **14** is disposed over (*i.e.*, surrounds) the aliphatic layer **18.** In some embodiments, the body portion **12** is configured to absorb oily/fatty byproducts of the aliphatic layer **18** *(e.g.,* by soaking, capillary action, and the like).

In some embodiments, a potting material layer **22** can be inserted into a portion of the support **10.** As shown in FIGURE 2, the potting material layer **22** is disposed within the silicone layer **14.** It will be appreciated that the potting material layer **22** can be disposed on any suitable portion of the support **10** (e.g., within the body portion **12,** between the body portion **12** and the silicone layer **14,** between the aliphatic layer **18** and the body portion **12,** between the aliphatic layer **18** and the silicone layer **14,** and the like). The potting material layer **22** can be cotton (or another filler material) to provide desirable cushioning and into which an oil/fatty byproduct of the aliphatic layer **18** is dispersed by soaking and/or capillary action.

Advantageously, the support **10** is shaped into a desired shape upon application of an external stimulus **24** thereto. Examples of the stimulus 24 can be: mechanical energy (*i.e.*, movement), thermal energy (e.g., crystallization, melting phenomena, and the like), light, and electrical energy. The type of stimulus **24** used depends on a variety of factors. For example, the selected type of stimulus **24** depends on: (1) the material(s) chosen to produce the support 10; (2) access to an incubator in which the neonate is held; (3) any presence of electrical cables or tubes; (4) absence of metals because of use of x-ray machines; or (5) complexity in general.

In some examples, a mechanical external stimulus **24** is applied to the support **10.** In this example, the shapeable material **16** and the aliphatic layer **18** are deformed with limited effort, but still exhibit enough rigidity to withstand neonatal weight and neonatal movements. In other examples, a thermal (hereinafter, "warmth") external stimulus **24** is applied to the support **10.** For example, the shapeable material **16** can be coated with the aliphatic layer **18,** shaped into a desired shape with warmth (e.g., from body heat or an external heat source) until the aliphatic layer **18** is slightly below, at, or above the melting point of the aliphatic compound **20,** and then left in room temperature to "freeze" *(i.e.,* cooled below the melting point of the aliphatic compound **20),** thereby allowing the body portion **12** to settle into the desired shape.

In other embodiments, one or more holes **26** can be formed into the body portion **12.** Advantageously, the holes **26** bridge a top portion (*i.e.*, a top surface) of the silicone layer **14** and a bottom portion *(i.e.,* a bottom surface) of the silicone layer **14,** thereby allowing the aliphatic layer **18** to penetrate into the body portion **12.** To separate the top and bottom portions of the silicone layer **14,** one or more separation members **28** are placed into the holes 26. The separation members **28** contact each of the top and bottom portions of the silicone layer **14** to provide a separation therebetween. In some examples, the separation members **28** can be rods; however, it will be appreciated that the separation members **28** can have any suitable configuration to separate the top and bottom portions of the silicone layer **14.** Advantageously, the separation members **28** limit access of the aliphatic layer **18** to the bottom portion of the silicone layer **14.**

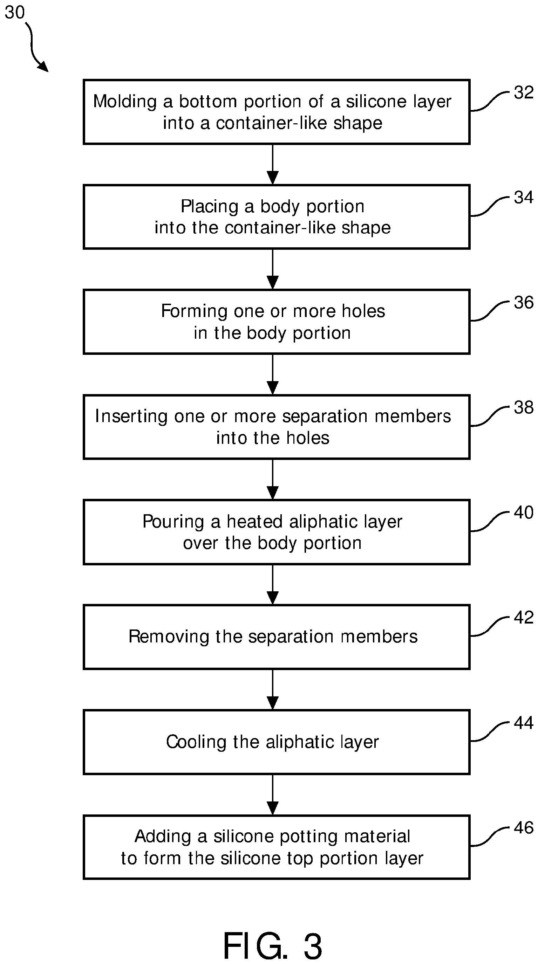

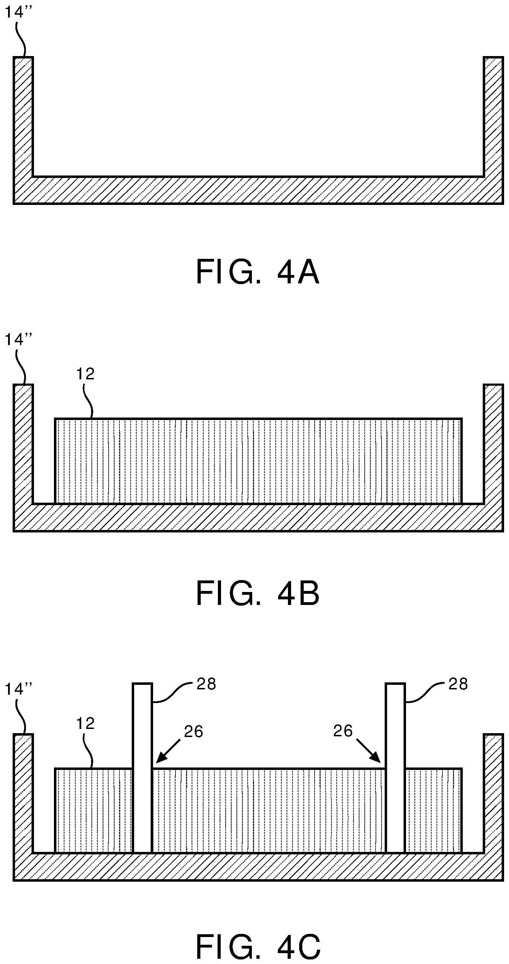

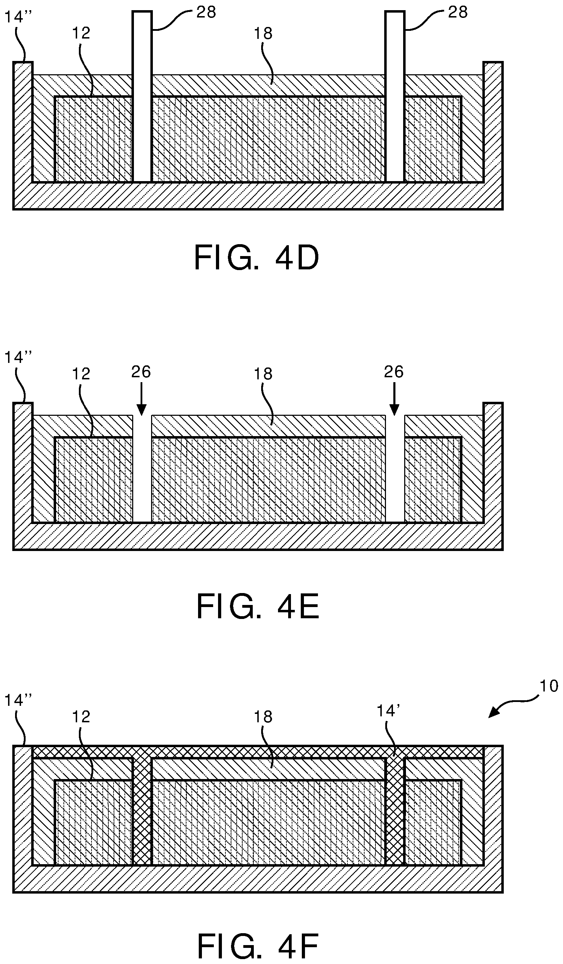

With reference to FIGURE 3 and to FIGURES 4A-4F, an example method **30** of making the support **10** is diagrammatically shown. The method **30** includes the steps of: molding a bottom portion **14"** of the silicone layer 14 into a container-like shape, as shown in FIGURE 4A (Step **32);** placing a body portion **12** into the container-like shape of the silicone layer bottom portion **14",** as shown in FIGURE 4B (Step **34);** forming one or more holes **26** in the body portion **12** to bridge between the top portion **14'** of the silicone layer **14** and the bottom portion **14"** of the silicone layer **14** (Step **36);** inserting one or more separation members **28** into the holes **26** for limiting access of the aliphatic layer **18** to the bottom silicone layer **14** surface, as shown in FIGURE 4C (Step **38);** pouring a heated aliphatic layer **18** over the body portion **12,** as shown in FIGURE 4D (Step **40);** removing the separation members **28,** as shown in FIGURE 4E (Step **42);** cooling the aliphatic layer **18** (Step **44);** and adding a potting material **22** that fills the openings **26** and forms the top portion **14'** of the silicone container **14** as shown in FIGURE 4F (Step **46).**

It is to be appreciated that the foregoing are merely illustrative examples, and numerous variants are contemplated in according with the present invention. Various meshes, granulated materials, or so forth can be employed as the body portion, or in some embodiments the body portion is omitted entirely. While the illustrative example is a disk-shaped generally planar support, in other embodiments the support may be otherwise shaped. It is contemplated to add an outer cloth jacket or other suitable outer layer to improve comfort at contact with the neonate. While in the illustrative fabrication process the container is sealed by potting the top portion **14',** other approaches are contemplated, such as providing a pre-molded top portion that is attached to the bottom portion by adhesive, heat-tacking or the like.

The invention has been described with reference to the preferred embodiments. It is intended that the invention be constructed as including all modifications and alterations as they come within the scope of the appended claims.

## Claims

1. A method (30) for making a support (10) for supporting a neonate, the method **(30)** comprising:
molding a bottom portion **(14")** of a silicone layer **(14)** into a container;
placing a body portion **(12)** into the container;
pouring a heated aliphatic layer **(18)** over the body portion **(12);**
cooling the aliphatic layer (18); and
adding a top portion **(14')** of the silicone layer **(14)** over the body portion **(12)** to seal the support **(10).**

2. The method according to claim 1, further including:
forming one or more holes **(26)** in the body portion **(12)** to bridge the top silicone portion **(14')** surface and the bottom silicone portion **(14")** surface prior to pouring the aliphatic layer **(18).**

3. The method according to claim 2, further including:
inserting one or more separation members **(28)** into the holes **(26)** for limiting access of the aliphatic layer **(18)** to the bottom silicone layer (14) surface; and
removing the separation members **(28)** before the aliphatic layer **(18)** is poured.

4. The method according to any one of claims 1-3, further including:
heating the aliphatic layer **(18)** to a temperature greater than a melting temperature thereof prior to pouring the aliphatic layer **(18)** on to the body portion **(12);** and/or
cooling the aliphatic layer **(18)** to a temperature lower than the melting temperature thereof after pouring the aliphatic layer **(18)** onto the body portion **(12).**

5. The method according to any one of claims 1-4, wherein adding a top portion **(14')** of the silicone layer **(14)** comprises:
potting the body portion **(12)** and the aliphatic layer **(18)** with silicone potting material.

## Patentansprüche

1. Eine Methode (**30**) für das Herstellen einer Stütze (**10**) für Neugeborene, wobei die Methode (**30**) folgende Schritte umfasst:
Formen des unteren Teils (**14"**) einer Silikonschicht (**14**) in einen Behälter;
Anordnen eines Gehäuseteils (**12**) im Behälter;
Gießen einer erwärmten aliphatischen Schicht (**18**) über das Gehäuseteil (**12**);
Kühlen der aliphatischen Schicht (**18**)**;** und
Hinzufügen eines oberen Teils (**14'**) der Silikonschicht (**14**) über dem Gehäuseteil (**12**), um die Stütze (**10**) abzudichten.

2. Die Methode gemäß Anspruch 1, die zudem folgenden Schritt umfasst:
Formen mindestens einer Öffnung (**26**) im Gehäuseteil (**12**), um die Lücke zwischen der Oberfläche des oberen Silikonteils (**14'**) und der Oberfläche des unteren Silikonteils (**14"**) vor dem Gießen der aliphatischen Schicht (**18**) zu schließen.

3. Die Methode gemäß Anspruch 2, die zudem folgende Schritte umfasst:
Einfügen mindestens eines Trennelements (**28**) in die Öffnungen (**26**), um den Zugang der aliphatischen Schicht (**18**) zur Oberfläche der unteren Silikonschicht (**14**) zu begrenzen; und
Entfernen der Trennelemente (**28**) vor dem Gießen der aliphatischen Schicht (**18**).

4. Die Methode gemäß einem der Ansprüche 1 bis 3, die zudem folgende Schritte umfasst:
Erwärmen der aliphatischen Schicht (**18**) auf eine Temperatur, die höher ist als deren Schmelztemperatur,
bevor die aliphatische Schicht (**18**) auf den Gehäuseteil (**12**) gegossen wird; und/oder
Kühlen der aliphatischen Schicht (**18**) auf eine Temperatur, die niedriger ist als deren Schmelztemperatur,
nachdem die aliphatische Schicht (**18**) auf den Gehäuseteil (**12**) gegossen wurde.

5. Die Methode gemäß einem der Ansprüche 1 bis 4, wobei das Hinzufügen des oberen Teils (**14'**) der Silikonschicht (**14**) folgenden Schritt umfasst:
Umgießen des Gehäuseteils (**12**) und der aliphatischen Schicht (**18**) mit Silikon-Vergussmaterial.

## Revendications

1. Procédé (**30**) pour réaliser un support (**10**) destiné à supporter un nouveau-né, le procédé (**30**) comprenant :
le moulage d'une partie inférieure (**14"**) d'une couche de silicone (**14**) dans un récipient ;
le placement d'une partie corps (**12**) dans le récipient ;
le versement d'une couche aliphatique chauffée (**18**) sur la partie corps (**12**) ;
le refroidissement de la couche aliphatique (**18**) ; et
l'ajout d'une partie supérieure (**14'**) de la couche de silicone (**14**) sur la partie corps (**12**) pour fermer le support (**10**).

2. Procédé selon la revendication 1, comprenant en outre :
la formation d'un ou de plusieurs trous (**26**) dans la partie corps (**12**) pour relier la surface de la partie de silicone supérieure (**14'**) et la surface de la partie de silicone inférieure (**14"**) avant de verser la couche aliphatique (**18**).

3. Procédé selon la revendication 2, comprenant en outre :
l'insertion d'un ou de plusieurs éléments de séparation (**28**) dans les trous (**26**) afin de limiter l'accès de la couche aliphatique (**18**) à la surface de la couche de silicone inférieure (**14**) ; et
le retrait des éléments de séparation (**28**) avant de verser la couche aliphatique (**18**).

4. Procédé selon l'une quelconque des revendications 1 à 3, comprenant en outre :
le chauffage de la couche aliphatique (**18**) à une température supérieure à une température de fusion de celle-ci avant de verser la couche aliphatique (**18**) sur la partie corps (**12**) ; et/ou
le refroidissement de la couche aliphatique (**18**) à une température inférieure à la température de fusion de celle-ci avant de verser la couche aliphatique (**18**) sur la partie corps (**12**).

5. Procédé selon l'une quelconque des revendications 1 à 4, dans lequel l'ajout d'une partie supérieure (**14'**) de la couche de silicone (**14**) comprend :
l'enrobage de la partie corps (**12**) et de la couche aliphatique (**18**) avec du matériau d'enrobage à base de silicone.
